Europäisches Patentamt

European Patent Office

Office européen des brevets

(19)

(11) Veröffentlichungsnummer: **0 044 956**
**B1**

## (12) EUROPÄISCHE PATENTSCHRIFT

(45) Veröffentlichungstag der Patentschrift:
28.03.84

(21) Anmeldenummer: 81105011.1

(22) Anmeldetag: 27.06.81

(51) Int. Cl.³: **E 04 B 1/98**, F 16 F 1/00,
G 10 K 11/16

(54) **Dämpfungsbelag.**

(30) Priorität: **30.07.80 DE 3028825**

(43) Veröffentlichungstag der Anmeldung:
**03.02.82 Patentblatt 82/5**

(45) Bekanntmachung des Hinweises auf die Patenterteilung:
**28.03.84 Patentblatt 84/13**

(84) Benannte Vertragsstaaten:
**FR GB IT**

(56) Entgegenhaltungen:
**DE - A - 1 925 775**
**DE - A - 2 819 123**
**DE - B - 2 708 896**
**US - A - 2 661 943**
**US - A - 3 159 249**
**US - A - 3 169 881**

(73) Patentinhaber: **Messerschmitt-Bölkow-Blohm
Gesellschaft mit beschränkter Haftung,
Robert-Koch-Strasse, D-8012 Ottobrunn (DE)**

(72) Erfinder: **Bschorr, Oskar, Dr. Dipl.-Ing., Kaplerstrasse 11,
D-8000 München 80 (DE)**
Erfinder: **Albrecht, Helmut, Dipl.-Ing., Floigerweg 10,
D-8160 Miesbach (DE)**

ACTORUM AG

## Dämpfungsbelag

Die Erfindung bezieht sich auf einen Dämfungsbelag, bestehend aus Plättchenelementen mit einem hohen Elastizitätsmodul, welche nebeneinander und in einer Lage angeordnet oder nebeneinander und in mehreren Lagen übereinander angeordnet sind, wobei dann die Plättchenelemente einer Lage die Fugen zwischen den Plättchenelementen einer benachbarten Lage überdecken und wobei zwischen den Lagen ein Dämpfungsstoff mit einem hohen Verlustfaktor des Schubmoduls angeordnet ist.

Solche Dämpfungsbeläge sind aus der DE-B Nr. 2708896 bekannt. Die Druckschrift zeichnet sich gegenüber dem übrigen Stand der Technik dadurch aus, dass sie durch bestimmte Dimensionierungs- und Ausbildungsmerkmale einen Dämpfungsbelag schafft, der eine weit höhere Wirkung gewährleistet und ausserdem eine Gewichtsersparnis erbringt. Auf dieser vorgenannten Erfindung baut die nachfolgend beschriebene Erfindung auf und ihr liegt die Aufgabe zugrunde, den Verlustmodul des Dämpfungsbelages weiter zu optimieren und sowohl die Herstellung zu vereinfachen als auch das verwendete Material besser auszunützen.

Diese Aufgabe wird durch die in den Ansprüchen niedergelegten Massnahmen in zuverlässiger Weise gelöst. In der nachfolgenden Beschreibung sind anhand von Ausführungsbeispielen die Merkmale der Erfindung beschrieben und erläutert. Diese Ausführungsbeispiele sind in der Zeichnung schematisch dargestellt. Es zeigen:

Fig. 1 einen Teilquerschnitt durch einen Dämpfungsbelag mit unterschiedlicher Dicke des Dämpfungsstoffes,

Fig. 2 einen Teilquerschnitt eines Dämpfungsbelages mit planen Plättchenelementen und inhomogener Verteilung des Dämpfungsstoffes,

Fig. 3 einen Teilquerschnitt eines Dämpfungsbelages mit unterschiedlicher Dicke des Dämpfungsstoffes,

Fig. 4 einen Teilquerschnitt eines Dämpfungsbelages mit zum Dämpfungsobjekt hin dünner werdenden Plättchenelementen,

Fig. 5 einen Teilquerschnitt eines Dämpfungsbelages mit zum Dämpfungsobjekt hin kürzer werdenden Plättchenelementen,

Fig. 6 eine Draufsicht auf einen Dämpfungsbelag mit Solltrennlinien,

Fig. 7 einen Teilquerschnitt eines Dämpfungsbelages, bei dem Plättchenelemente mit dem Dämpfungsobjekt angeschweisst sind,

Fig. 8 einen Teilquerschnitt eines Dämpfungsbelages mit Schutzhülle und Vakuumverschluss,

Fig. 9 einen Teilquerschnitt eines Dämpfungsbelages mit einem Schutzgehäuse,

Fig. 10 eine Draufsicht auf einen Dämpfungsbelag mit sechseckigem Plättchenelementen-Grundriss,

Fig. 11 eine Draufsicht auf einen Dämpfungsbelag mit dreieckigem Plättchenelementen-Grundriss,

Fig. 12 eine Draufsicht auf einen Dämpfungsbelag mit rautenförmigem Plättchenelementen-Grundriss,

Fig. 13 einen Teilquerschnitt durch einen Dämpfungsbelag mit Verbindungsstegen und Festkörper-Dämpfungsstoffen, und

Fig. 14 einen Teilquerschnitt durch einen geschlossen und allseitig ummantelten Dämpfungsbelag.

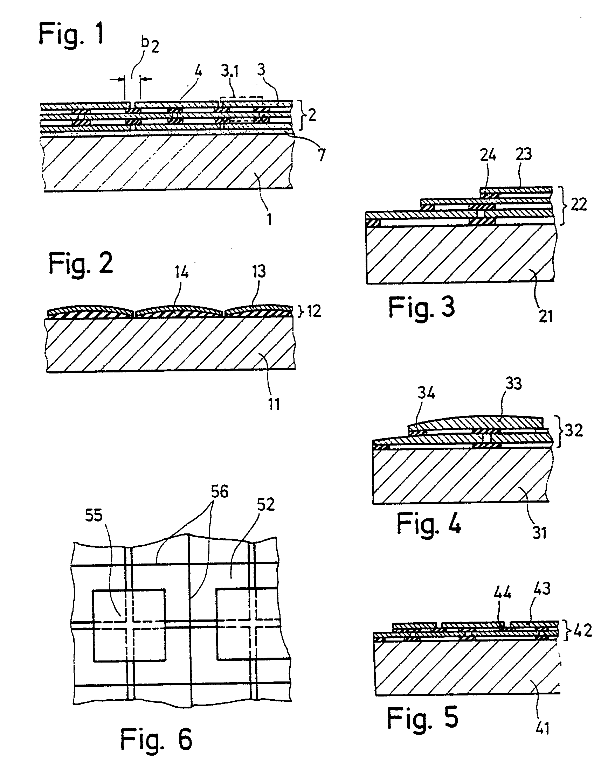

Es ist bekannt, dass eine dreieckförmige Querschnittsfläche der den Dämpfungsbelag aufbauenden Plättchenelemente den höchstmöglichen Verlustmodul $E''$ ergibt. Dies ist theoretisch gesehen auch der Fall und er beträgt im Optimum $E'' = \frac{1}{2} E_1$, wobei $E_1$ der Elastizitätsmodul der Plättchenelemente ist. Bei Plättchenelementen mit konstantem Querschnitt bzw. Dicke ist jedoch nur ein Verlusmodulwert $E'' = \frac{3}{8} E_1$ zu erreichen, was einer 25%igen Veringerung entspricht. Andererseits aber ist es erheblich aufwandsloser, plane Plättchenformen herzustellen und auch von der Geometrie her einfacher in Flächenformen zu integrieren. Hier setzt die vorliegende Erfindung ein und ermöglicht, beide vorgenannten Vorteile zu erhalten, indem der sich zwischen den Plättchenelementen 3, 23 etc. befindliche Dämpfungsstoff 4, 24 etc. nicht homogen angeordnet bzw. ausgebildet ist, sondern an den Rändern der Überlappungsbereiche 3.1 je zweier Plättchenelemente 3, einen höheren Schubmodul aufweist als in der Mittelpartie. Bei einem einlagigen Dämpfungsbelag kann dies auch durch Veränderung der Schichtdicke des Dämpfungsstoffes im Bereich eines Plättchenelementes 13, z.B. gemäss Fig. 2, erreicht werden.

Bei mehrlagigen Dämpfungsbelägen herrscht an den Randstellen naturgemäss noch nicht die homogene Spannungsverteilung über die gesamte Belaghöhe, denn die höheren, am Rande befindlichen oberen Schichten sind noch nicht im Spannungsfluss. Dem begegnet die Erfindung dadurch, dass der Dämpfungsbelag jeweils zum zu dämpfenden Objekt hin abgeschrägt wird, und zwar so, dass die höheren Lagen jeweils zurückversetzt sind. Hierdurch wird ausserdem noch der Rand flexibler und kann anpassungsgenauer an der zu dämpfenden Oberfläche angebracht werden.

Um nun auch noch die an den Rändern des Dämpfungsbelages auftretenden Spannungsstörungen zu verkleinern, werden die Länge und/oder die Höhe der Plättchenelemente zum Rande hin verkleinert.

Nachfolgend seien nun einzelne, nach der Erfindung gestaltete Ausführungsbeispiele von Dämpfungsbelägen beschrieben.

Die Fig. 1 zeigt einen Querschnitt eines Dämpfungsbelages 2, der auf einer zu dämpfenden Struktur 1 kraftschlüssig — beispielsweise durch Klebung 7 — befestigt ist. Diese Verklebung 7 braucht hierbei keine dämpfenden Eigenschaften aufzuweisen, sondern lediglich zur vollen Kraftübertragung einen höheren Schubmodul besitzen, als ihn der Dämpfungsstoff 4 hat. Der Dämpfungsbelag 2 setzt sich aus quadratischen Plättchenelementen 3 mit konstanter Dicke und einem Dämpfungsstoff 4 zusammen. Letzterer ist streifenförmig in einer Breite $b_2$ entlang den Rändern der Plättchenelemente 3 angeordnet. Dadurch entsteht im Mittelbereich der Plättchen ein Hohlraum, der entweder leer bleiben kann oder mit einem Füllmaterial von geringem Schubmodul versehen wird. Wird der Dämpfungsbelag 4 einer Zugspannung ausgesetzt, so ist die Kraftübertragung in den Plättchenelementen 3 auf die Ränder konzentriert. Im Extremfall, also dann, wenn die Kraftumleitung lediglich am Rand erfolgt ($b_2 \rightarrow 0$), herrscht über die Länge der Plättchenelemente eine gleiche Spannungsverteilung. Es zeigt sich, dass der integrale Verlustmodul E'' des Dämpfungsbelages 2 um so mehr an dem maximal möglichen Wert ½ $E_1$, – wobei $E_1$ der Elastizitätsmodul des Plättchenelementes ist – heranreicht, je besser die Gleichverteilung der Materialspannung ist. Dies resultiert aus der Krafteinleitung an den Rändern.

Die Dimensionierungsvorschriften für die Abmessungen unter Berücksichtigung der Materialeigenschaften lauten:

a)  $\dfrac{4\,h_1\,h_2\,E_1}{l \cdot b_2\,G_2} = \begin{cases} 2 \text{ bei beidseitig vom Dämpfungsstoff umgebenem Plättchenelement} \\ 1 \text{ bei einseitig vom Dämpfungsstoff umgebenem Plättchenelement} \end{cases}$

b)  $h_2 \ll h_1$
c)  $b_2 \ll l$
d)  $G_2 = iG''_2$

Hierbei bedeuten:

$h_1, l, E_1$    Dicke, Kantenlänge und Elastizitätsmodul der Plättchenelemente

$h_2, b_2, G_2$  Dicke, Breite und Verlustmodul des Dämpfungsstoffes

Mit den unter b bis d angegebenen Nebenbedingungen erhält man den maximal möglichen Verlustmodul des Dämpfungsbelages E'' = ½ $E_1$.

In Fig. 2 ist eine Ausführungsform gezeigt, bei der ebenfalls eine Gleichverteilung der Zugspannung angestrebt ist, um damit den maximal möglichen Verlustmodul des Dämpfungsbelages 12 zu erreichen. Dieser setzt sich wieder aus Plättchenelementen 13 zusammen, die einen quadratischen Grundriss und eine konstante Dicke aufweisen. Zwischen den Plättchen und den einzelnen Lagen befindet sich ein Dämpfungsstoff 14, wobei dessen Dicke an den Rändern der Plättchenelemente 13 kleiner als in der Mitte derselben ist. Je geringer diese Dicke ist, desto grösser ist deren Federkonstante bezüglich der Schubbelastung. Auch diese Ausführungsform realisiert eine Krafteinleitung in den Randpartien der Plättchenelemente 13, so dass letztere über die gesamte Länge gesehen eine konstante Zugbelastung aufweisen. Durch Steuerung der Dicke und des Schubmoduls des Dämpfungsstoffes können nun auch ungleichförmige Plättchenelemente im Sinne des vorliegenden Erfindungsgedankens optimiert werden.

Eine andere Ausführungsform zeigt die Fig. 3. Hier sind die Plättchenelemente 23 der oberen Lagen zurückversetzt, so dass an den Rändern des Dämpfungsbelages 22 noch keine Spannungseinleitung stattfindet. Zwischen den einzelnen Lagen befindet sich wieder ein Dämpfungsstoff 24. Der Dämpfungsbelag 22 selbst ist kraftschlüssig am zu dämpfenden Bauteil 21 befestigt, beispielsweise durch Klebung, Lötung, etc.

Ein Ausführungsbeispiel des Dämpfungsbelages zur Kompensation von Randstörungen zeigt die Fig. 4. Hierzu weisen die den Dämpfungsbelag 32 bildenden Plättchenelemente 33 eine zum Rande hin abnehmende Dicke auf.

Eine weitere Ausführungsform zur Kompensation von Randstörungen ist in der Fig. 5 dargestellt. Hier wird die Länge der den Dämpfungsbelag 42 aufbauenden Plättchenelemente 43 zum Rande hin verkürzt. In beiden vorgenannten Fällen ist die Dicke des Dämpfungsstoffes 34, 44 der veränderten Geometrie angepasst.

Die Fig. 6 zeigt eine andere Variante eines Dämpfungsbelages 52. Dieser ist hier in Flächenelemente 55 unterteilt, die untereinander Solltrennlinien 56 aufweisen. Damit ist es möglich, unterschiedliche Flächenformen zu bilden, bzw. die Form den Gegebenheiten des zu dämpfenden Werkstückes etc. anzupassen. Die Flächenelemente 55 weisen mit zu den Solltrennlinien 56 hin abgeschrägte Ränder auf.

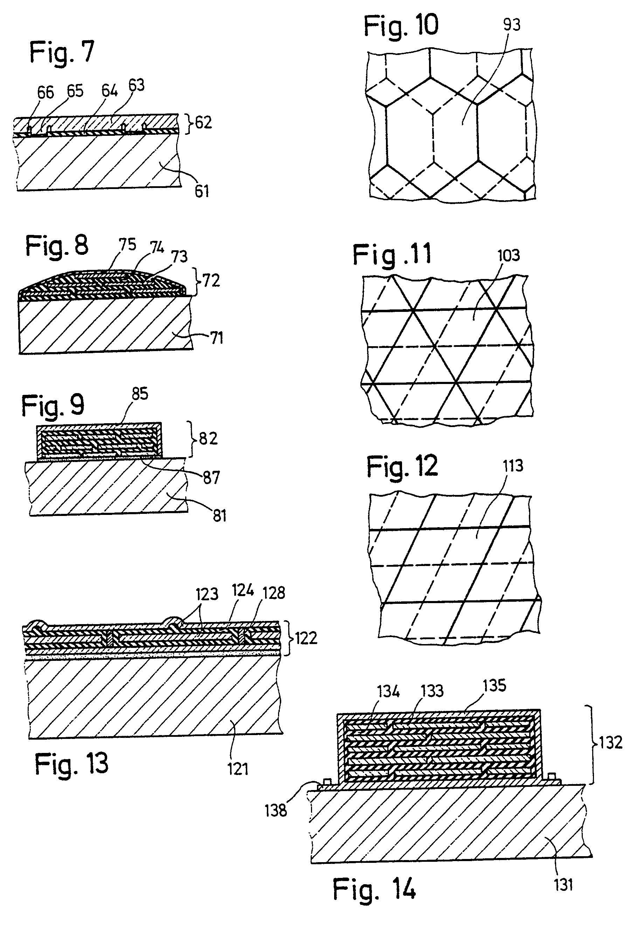

Einen im Querschnitt einlagigen Dämpfungsbelag 62 zeigt die Fig. 7, der an den Stegen 65 fest mit dem zu dämpfenden Bauteil befestigt ist. Dies kann – wie schon erwähnt – durch Kleben, Löten, Verschweissen etc. erfolgen. Durch Kerben 66 oder durch Bördelung ist nun eine Zugunterbrechung gegeben. Der Dämpfungsstoff 64 befindet sich zwischen den rasterlinienförmig gekreuzten Stegen 65 an den Plättchenelementen 63. Mit dieser Anordnung lässt sich auch ein Dämpfungsstoff 64 aus Feststoffen – wie beispielsweise Graphit – verwenden. Der für die Reibung notwendige Anpressdruck wird dadurch erreicht, dass die Plättchenelemente 63 eine statische Wölbung erhalten, die dann eine elastische Anpresskraft, ähnlich der bekannten Tellerfedern, ergibt. Die hier gezeigte einlagige Form lässt sich sinngemäss auch mehrlagig ausführen.

Ein Ausführungsbeispiel eines Dämpfungsbelages 72 bei dem zu den Plättchenelementen 73 ein Feststoff-Dämpfungsstoff 74 verwendet wird, zeigt die Fig. 8. Hierbei ist weiterhin der Dämpfungsbelag 72 von einer vakuumdichten Schutzhülle 75 umgeben und evakuiert. Der notwendige Anpressdruck für die Coulombsche Feststoffreibung wird durch den atmosphärischen Aussendruck aufgebracht.

Die Fig. 9 zeigt ein Ausführungsbeispiel, bei dem der Dämpfungsbelag 82 in einem korrosionsgeschützten Gehäuse 85 untergebracht ist und die gesamte Anordnung durch eine Verklebung 87 oder durch eine andere kraftschlüssige Verbindung, wie Löten, Schweissen etc. an dem zu dämpfenden Bauteil 81 befestigt ist.

Die Fig. 10 bis 12 zeigen Ausführungsbeispiele, bei denen die Plättchenelemente 93, 103 und 113 verschiedene Grundrissformen haben, nämlich sechseckig, dreieckig und rautenförmig. Bei mehrlagigem Dämpfungsbelag sind die einzelnen Schichten gegeneinander versetzt angeordnet, wie dies gestrichelt in den Figuren angedeutet ist. Hierbei ist die Rautenform dann angebracht, wenn eine bevorzugte Schwingungsrichtung vorliegt.

Die Fig. 13 zeigt einen Dämpfungsbelag 122, bestehend aus den Plättchenelementen 123 und dem dazwischenliegenden Dämpfungsstoff 124. Zusätzlich sorgen Verbindungsstege 128 für einen Zusammenhalt der einzelnen Lagen. Die Verbindungsstege 128 können durch Schweissen, Kleben etc. mit den Elementen 123 verbunden sein. Diese Ausführungsform erlaubt die Verwendung von nichtklebenden Dämpfungsstoffen 124. Bei einer statischen Vorwölbung der Plättchenelemente 123 gelingt es damit, auch die Verspannung zu erreichen, um beispielsweise bei Festkörper-Dämpfungsstoffen 124 die erforderliche Anpresskraft zu gewährleisten.

In der Fig. 14 ist ein Dämpfungsbelag 132 gezeigt, der durch einen Mantel 135 allseitig umschlossen ist. Dieser als komplettes Bauteil dienende Dämpfungsbelag 132 besteht aus mehreren Lagen von Plättchenelementen 133 mit dazwischenliegendem Dämpfungsstoff 134 und wird beispielsweise durch die Flansche 138 mit dem zu dämpfenden Bauteil verbunden.

## Patentansprüche

1. Dämpfungsbelag (2, 12, 22), bestehend aus Plättchenelementen (3, 13, 23) mit einem hohen Elastizitätsmodul, welche nebeneinander und in einer Lage angeordnet oder nebeneinander und in mehreren Lagen übereinander angeordnet sind, wobei dann die Plättchenelemente (3, 23) einer Lage die Fugen zwischen den Plättchenelementen (3, 23) einer benachbarten Lage überdecken und wobei zwischen den Lagen ein Dämpfungsstoff (4, 24) mit einem hohen Verlustfaktor des Schubmoduls angeordnet ist, dadurch gekennzeichnet, dass zur Erzielung einer Gleichverteilung der Materialspannungen innerhalb des Dämpfungsbelages die Federkonstante des Dämpfungsstoffes (4, 14, 24) bei einem einlagigen Dämpfungsbelag (12) im Bereich eines Plättchenelementes (13) bzw. bei einem mehrlagigen Dämpfungsbelag (2, 22) im Überlappungsbereich (3.1) zweier Plättchenelemente (3, 23) von der Mitte des jeweiligen Bereiches zu dessen Rändern hin zunimmt, wobei an den Randbereichen der Plättchenelemente (3, 13, 23) ein Dämpfungsstoff (4, 14, 24) angeordnet ist, dessen Breite, Dicke und Verlustmodul auf die Seitenlänge, Dicke und den Elastizitätsmodul der Plättchenelemente (3, 13, 23) dimensioniert und abgestimmt ist.

2. Dämpfungsbelag nach Anspruch 1, dadurch gekennzeichnet, dass an den Randbereichen der Plättchenelemente (3, 13, 23 etc.) ein Dämpfungsstoff (4, 14, 24 etc.) angeordnet ist, dessen Breite ($b_2$), Dicke ($h_2$) und Verlustschubmodul ($G_2$) auf die Seitenlänge (l), Dicke ($h_1$) und den Elastizitätsmodul ($E_1$) der Plättchenelemente (3) abgestimmt ist nach den Dimensionierungsvorschriften:

a) $\dfrac{4\,h_1\,h_2\,E_1}{l \cdot b_2\,G_2} = $ 2 wenn ein Plättchenelement beidseitig mit Dämpfungsstoff umgeben ist 1 wenn ein Plättchenelement am oberen Rand mit Dämpfungsstoff umgeben ist

b) $h_2 \ll h_1$

c) $b_2 \ll l$

3. Dämpfungsbelag nach einem der Ansprüche 1 oder 2, dadurch gekennzeichnet, dass der Dämpfungsstoff (14) an den Rändern der Plättchenelemente (13) eine geringere Dicke als im Mittenbereich aufweist.

4. Dämpfungsbelag nach einem der Ansprüche 1 oder 2, dadurch gekennzeichnet, dass die Ränder des Dämpfungsbelages (22, 32) abgeschrägt sind.

5. Dämpfungsbelag nach einem der Ansprüche 1 bis 4, dadurch gekennzeichnet, dass der Dämpfungsbelag (52) in Unterflächen (55) unterteilt ist und sich an den Rändern Solltrennlinien (56) bzw. an den Eckpunkten Solltrennpunkte befinden.

6. Dämpfungsbelag nach einem der Ansprüche 1 bis 5, dadurch gekennzeichnet, dass die Plättchenelemente (63) einer Schichtlage mittels Einschnitten, Kerben, Bördelungen (66) etc. unterteilt sind und sich dazwischen Stege (65) befinden, die mit dem zu dämpfenden Bauteil (61) durch Kleben, Elektroschweissen oder Löten fest verbunden sind, während sich der Dämpfungsstoff (64) in den sich gebildeten Taschen befindet.

7. Dämpfungsbelag nach einem der Ansprüche 1 bis 6, dadurch gekennzeichnet, dass die Plättchenelemente (63) mit einer Wölbung versehen sind, so dass bei der Befestigung durch den Steg (65) ein elastischer Anpressdruck erzeugt wird, der dem Dämpfungsstoff (64) aus Graphit, Sulfide, Metallpulver etc. eine Coulombsche Reibung vermittelt.

8. Dämpfungsbelag nach einem der Ansprüche 1 bis 7, dadurch gekennzeichnet, dass der Dämpfungsbelag (72) von einer Schutzhülle (75) umgeben ist, deren Innenraum evakuiert ist und damit der Aussendruck den als Dämpfungsmittel (74) dienenden Feststoffen wie Graphit, Sulfide etc. eine Coulombsche Reibung vermittelt.

9. Dämpfungsbelag nach einem der Ansprüche 1 bis 8, dadurch gekennzeichnet, dass die Grundrisse der Plättchenelemente (3, 13, ..., 83) neben der Quadratform auch sechseckigen (93), dreieckigen (103) oder rautenförmigen (113) Grundriss aufweisen.

10. Dämpfungsbelag nach einem der Ansprüche 1 bis 9, dadurch gekennzeichnet, dass zwischen den einzelnen Lagen aus Plättchenelementen (123) Verbindungsstege (128) angeordnet sind.

11. Dämpfungsbelag nach einem der Ansprüche 1 bis 10, dadurch gekennzeichnet, dass der Dämpfungsbelag (132) allseitig von einem Gehäusemantel (135) umgeben ist und mittels Flanschen oder anderer Befestigungsmittel (138) mit dem zu dämpfenden Bauteil befestigt wird.

## Revendications

1. Revêtement amortisseur (2, 12, 22) constitué de plaquettes (3, 13, 23) à haut module d'élasticité, qui sont disposées les unes à côté des autres et en une seule couche, ou les unes à côté des autres et en plusieurs couches superposées, les plaquettes (3, 23) d'une couche recouvrant alors les joints entre les plaquettes (3, 23) d'une couche voisine, et entre les couches étant inséré un matériau d'amortissement (4, 24) ayant un facteur de pertes élevé du module de cisaillement, caractérisé par le fait que, pour obtenir une répartition régulière des contraintes du matériau à l'intérieur du revêtement amortisseur, la constante élastique du matériau d'amortissement (4, 14, 24), dans le cas d'un revêtement (12) à une seule couche dans la zone d'une plaquette (13) et dans le cas d'un revêtement (2, 22) à plusieurs couches dans la zone de recouvrement (3.1) de deux plaquettes (3, 23), augmente du centre de chaque zone considérée vers les bords de celle-ci, et sur les zones marginales des plaquettes (3, 13, 23) est disposé un matériau d'amortissement (4, 14, 24) dont la largeur, l'épaisseur et le module de pertes sont dimensionnés et accordés sur la longueur des côtés, l'épaisseur et le module d'élasticité des plaquettes (3, 13, 23).

2. Revêtement amortisseur selon la revendication 1, caractérisé par le fait que sur les zones marginales des plaquettes (3, 13, 23, etc.) est disposé un matériau d'amortissement (4, 14, 24, etc.) dont la largeur ($b_2$), l'épaisseur ($h_2$) et le module de pertes au cisaillement ($G_2$) sont accordés sur la longueur des côtés (l), l'épaisseur ($h_1$) et le module d'élasticité ($E_1$) des plaquettes (3) d'après les prescriptions de dimensionnement:

a) $\dfrac{4\, h_1\, h_2\, E_1}{l \cdot b_2\, G_2} =$ 2 lorsqu'une plaquette est entourée des deux côtés par le matériau d'amortissement 1 lorsqu'une plaquette est entourée sur le bord supérieur par le matériau d'amortissement

b) $h_2 \ll h_1$
c) $b_2 \ll l$

3. Revêtement amortisseur selon l'une des revendications 1 ou 2, caractérisé par le fait que le matériau d'amortissement (14) sur les bords des plaquettes (13) a une épaisseur plus faible que dans la zone médiane.

4. Revêtement amortisseur selon l'une des revendications 1 ou 2, caractérisé par le fait que les bords du revêtement amortisseur (22, 32) sont chanfreinés.

5. Revêtement amortisseur selon l'une des revendications 1 à 4, caractérisé par le fait que le revêtement amortisseur (52) est divisé en éléments de surface (55) et que des lignes de séparation de consigne (56) se trouvent au niveau des bords et des points de séparation de consigne au niveau des points d'angle.

6. Revêtement amortisseur selon l'une des revendications 1 à 5, caractérisé par le fait que les plaquettes (63) d'une couche sont divisées au moyen d'encoches, d'entailles, de bridages (66), etc., et que dans les intervalles se trouvent des nervures (65) qui sont solidement raccordées, par collage, soudage électrique ou brasage, à l'élément de construction (61) à amortir, tandis que le matériau d'amortissement (64) se trouve dans les poches formées.

7. Revêtement amortisseur selon l'une des revendications 1 à 6, caractérisé par le fait que les plaquettes (63) sont munies d'un bombement, de façon que, lors de la fixation au moyen de la nervure (65), il se produise une force de serrage élastique qui confère un frottement coulombien au matériau d'amortissement (64) en graphite, sulfure, poudre de métal, etc.

8. Revêtement amortisseur selon l'une des revendications 1 à 7, caractérisé par le fait que le revêtement amortisseur (72) est entouré par une enveloppe de protection (75) dont l'espace interne est mis sous vide et que par conséquent la pression externe confère un frottement coulombien aux matériaux solides tels que graphite, sulfure, etc., servant de moyen d'amortissement (74).

9. Revêtement amortisseur selon l'une des revendications 1 à 8, caractérisé par le fait que les sections horizontales des plaquettes (3, 13, ..., 83) en plus de la forme carrée présentent aussi des formes hexagonales (93), triangulaire (103) ou rhombique (113).

10. Revêtement amortisseur selon l'une des revendications 1 à 9, caractérisé par le fait qu'entre les différentes couches de plaquettes (123) sont disposées des barrettes de raccordement (128).

11. Revêtement amortisseur selon l'une des revendications 1 à 10, caractérisé par le fait que le revêtement amortisseur (132) est entouré de tous côtés par une enveloppe (135) et est fixé, au moyen de brides ou autres moyens de fixation (138), à l'élément de construction à amortir.

## Claims

1. A damping covering (2, 12, 22), comprising platelet elements (3, 13, 23) having a high modulus of elasticity which are arranged side by side and is one layer or are arranged side by side and in several layers one above the other, in which respect the platelet elements (3, 23) of one layer cover the joints between the platelet elements (3, 23) of an adjacent layer and in which respect a damping material (4, 24) having a high loss factor of the modulus of shear is arranged between the layers, characterised in that, to achieve an equal distribution of the material tensions within the damping covering, the spring constant of the damping material (4, 14, 24) increases in the case of a one-layer damping covering (12) in the region of a platelet element (13) or respectively in the case of a multilayer damping covering (2, 22) in the overlap region (3.1) or two platelet elements (3, 23) from the centre of the respective region towards the edges thereof, in which respect arranged at the edge regions of the platelet elements (3, 13, 23) is a damping material (4, 14, 24) the width, thickness and loss modulus of which is dimensioned and coordinated to the side length, thickness and the modulus of elasticity of the platelet elements (3, 13, 23).

2. A damping covering according to claim 1, characterised in that arranged at the edge regions of the platelet elements (3, 13, 23, etc.) is a damping material (4, 14, 24, etc.) the width ($b_2$), thickness ($h_2$) and loss shear modulus ($G_2$) of which is coordinated to the side length (l), thickness ($h_1$) and the modulus of elasticity ($E_1$) of the platelet elements (3) in accordance with the dimensioning specifications—

(a) $\dfrac{4\,h_1\,h_2\,E_1}{l\cdot b_2\,G_2} =$ 2 if a platelet element is surrounded on both sides with damping material 1 if a platelet element is surrounded at the upper edge with damping material

(b) $h_2 \ll h_1$

(c) $b_2 \ll l$

3. A damping covering according to claim 1 or 2, characterised in that the damping material (14) at the edges of the platelet elements (13) has a lesser thickness than in the central region.

4. A damping covering according to claim 1 or 2, characterised in that the edges of the damping covering (22, 32) are bevelled.

5. A damping covering according to one of claims 1 to 4, characterised in that the damping covering (52) is subdivided into sub-areas (55) and predetermined separating lines (56) are disposed at the edges or respectively predetermined separating points are disposed at the corner points.

6. A damping covering according to one of claims 1 to 5, characterised in that the platelet elements (63) of a layer are subdivided by means of incisions, notches, flanges (66), etc., and disposed therebetween are webs (65) which are securely connected by bonding, electro-welding or soldering to the structural member (61) that is to be damped, whilst the damping material (64) is disposed in the pockets which have been formed.

7. A damping covering according to one of claims 1 to 6, characterised in that the platelet elements (63) are provided with an arching, so that upon the fastening by the web (65) an elastic bearing pressure is generated which imparts a Coulomb friction to the damping material (64) made of graphite, sulphides, metal powder, etc.

8. A damping covering according to one of claims 1 to 7, characterised in that the damping covering (72) is surrounded by a protective sheathing (75) the interior space of which is evacuated and thus the external pressure imparts a Coulomb friction to the hard substance, such as graphite, sulphides, etc., which serve as the damping means (74).

9. A damping covering according to one of claims 1 to 8, characterised in that the ground plans of the platelet elements (3, 13, ..., 83) have, besides the square shape, also a hexagonal (93), triangular (103) or rhombic (113) ground plan.

10. A damping covering according to one of claims 1 to 9, characterised in that connecting webs (128) are arranged between the individual layers of platelet elements (123).

11. A damping covering according to one of claims 1 to 10, characterised in that the damping covering (132) is surrounded on all sides by a housing jacket (135) and is fastened by means of flanges or other fastening means (138) to the structural member that is to be damped.

## Fig. 1

$b_2$, 4, 3.1, 3, 2, 7, 1

## Fig. 2

14, 13, 12, 11

## Fig. 3

24, 23, 22, 21

## Fig. 4

34, 33, 32, 31

## Fig. 5

44, 43, 42, 41

## Fig. 6

56, 55, 52

Fig. 7

Fig. 10

Fig. 8

Fig. 11

Fig. 9

Fig. 12

Fig. 13

Fig. 14